Europäisches Patentamt

(19)   European Patent Office

Office européen des brevets

(11)   EP 0 873 690 A1

## (12)   EUROPEAN PATENT APPLICATION

(43) Date of publication:
      28.10.1998  Bulletin 1998/44

(51) Int. Cl.$^6$: **A23C 11/04**, A23C 9/15,
                    A23L 1/30, A23C 1/12

(21) Application number: 97201170.4

(22) Date of filing: 21.04.1997

(84) Designated Contracting States:
      AT BE CH DE DK ES FI FR GB GR IE IT LI LU MC
      NL PT SE

(71) Applicant: N.V. Nutricia
      2700 MA  Zoetermeer (NL)

(72) Inventors:
      • Van Es, Jentje Freerk
        NL-6717 KREDE (NL)

• Verdurmen, Rudolph Eduardus Maria
  NL-3571 JB Utrecht (NL)

(74) Representative:
      de Bruijn, Leendert C. et al
      Nederlandsch Octrooibureau
      P.O. Box 29720
      2502 LS  Den Haag (NL)

### (54)   Process of preparing a fat-containing foodstuff

(57)   A process is described for preparing a food product comprising adding a fat phase to an aqueous phase, by measuring the density, the mass flow and optionally the temperature of the aqueous phase prior to the addition, as well as the density, the mass flow and optionally the temperature of the fat phase prior to the addition, feeding the combined measured values to a metering unit and metering the fat addition according to a predetermined ratio between fat phase and aqueous phase in the food product.

In a similar process for preparing a food product, the fat phase is added to the liquid aqueous phase and homogenised, said adding and homogenising being located between two evaporators of a plurality of evaporator effects. Especially the aqueous phase to which the fat phase is added has a water content of between 60 and 85 % by weight.

fig 1. Process Flow Diagram

**Description**

The present invention relates to a process of preparing a fat-containing foodstuff. More in particular, it relates to a process of adding a fat phase to an aqueous phase in such a manner that a foodstuff is obtained which meets strict standards as to microbiological safety, while sensitive components in the product remain undamaged.

A process for preparing milk concentrates by adding a fraction of the fat phase to the milk liquid within one or more effects of an evaporator, rather than to the milk liquid prior to the evaporation step, is described in EP-A-624317. This process uses a liquid container downstream of the evaporator for accommodating fluctuations in the composition of the mixture and for adding further components. Such a downstream container requires low temperatures for minimising microbial growth and increases the risk of microbial contamination. It is therefore either uneconomical from an energy point of view or of insufficient microbial safety, or both. When a greater proportion of fat has to be added, this may cause clogging and fouling problems in the subsequent stages of the evaporator. Furthermore, a complete mixing of the fat fraction and the aqueous phase with optimum particle size distribution is not always possible.

A process has been found which allows the preparation of a food product comprising an aqueous phase and a fat phase, having the following advantages:

- the fat phase can be added in such a manner that a well homogenised food product having desired particle size distribution is obtained;
- a fat phase containing sensitive components, such as long-chain polyunsaturated fatty acid derivatives, can be added without degradation of these sensitive components;
- the food product can be treated so as to achieve optimum microbial safety, while at the same time deterioration of heat-sensitive components in the food product, such as whey proteins, poly-unsaturated fatty acids and fat soluble components, is minimised.

Thus, the present invention provides a process for the preparation of a food product as defined in the appending claims.

In a first aspect, the invention provides for the addition a fat phase to an aqueous phase in a process which comprises dehydrating the aqueous phase by means of a series of evaporator effects. The fat phase is added in a line connecting two consecutive evaporator effects, and the mixture is homogenised immediately downstream of the point of addition by means of a homogeniser. Preferably, a pump is located immediately before the point of fat addition, in the line conducting the aqueous phase. This mode of fat addition obviates the need for a liquid container downstream of the evaporator system to allow for final homogenation and tuning of the product composition; the homogenation and tuning are already achieved in the in-line homogeniser used according to the invention. The fat phase to be added may be the entire fat phase of the final food product or a major part (at least 35%, preferably at least 50% by weight) of the fat phase comprising sensitive fatty components such as long-chain poly-unsaturated fatty acids (fish oil and the like). Most preferably, essentially the entire fat phase is added in-line. The addition of the fat phase between two evaporator effects rather than in one of the effects themselves was found to result in an optimum balance between fat quality (a heat-sensitive fat requiring exposure to heat being minimised), a total microbial safety, a homogeneous distribution of the fat phase in the aqueous phase and a saving in energy consumption required for complete homogenation. This treatment preferably results in a particle size distribution of the fat phase in the aqueous phase having a $D(4,3)$ of less then 0.8 $\mu$m and more than 0.3 $\mu$m; most preferably, the $D(4,3)$ is below 0.6 $\mu$m. Preferably, less than 2%, especially less than 1%, of the fat particles will have a particle size of more than 3 $\mu$m. The product obtained according to the invention is further characterised by a low oxidation state of the fat phase, in particular by a peroxide value of less than 1 meq, especially less than 0.8 meq per kg fat.

The fat phase is preferably added to the aqueous phase when the latter has a water content of between 48 and 92 % by weight, more preferably between 60 and 85 % by weight. If the evaporator system comprises more than two effects, the fat is preferentially added between the first and the second evaporator effect.

In a second aspect, the invention provides for a perfectly matched fat addition which is adapted to possible fluctuations in the composition of the aqueous phase. This is achieved by in-line measurement of the composition of the aqueous phase and the composition of the fat phase, feeding the measured data to a data processor and controlling the fat addition on the basis of the output of the data processor, e.g. by means of a processor-controlled pump.

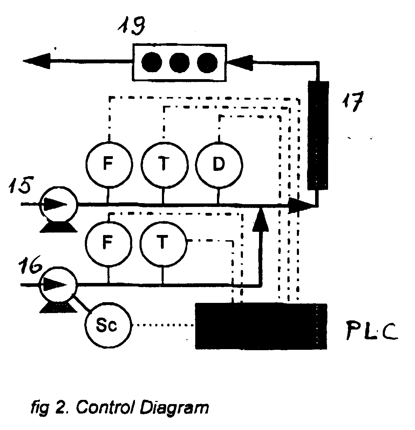

A system of dosing accurate amounts of fat to an aqueous phase according to this second aspect of the invention is shown in figure 2. The aqueous phase can be the concentrated phase issuing from a first effect of an evaporator, which is conducted by means of pump 15. Before the aqueous phase is pumped to the static mixer 17, the flow (F), density (D) and temperature (T) are measured. The results are used for calculating the total solids flow of the aqueous phase ($TSF_a$) in kg/h, using the formula (1):

$$TSF_a = (Mass\ flow)_a * TS_a \qquad (1)$$
$$= Flow_a * D_a * TS_a$$

in which

$TS_a$ =    the total solids content of the aqueous phase as can be calculated from the density and the temperature, in wt.%,

$(Mass\ flow)_a$ =    mass flow of aqueous phase in kg/h,

$Flow_a$ =    flow of aqueous phase in l/h,

$D_a$ =    density of the aqueous phase in kg/l

The desired amount of fat is calculated from the total solids flow of the aqueous phase and the desired composition of the final product, using formula (2):

$$FatR = [Tf/(Tf+Ta)] * 100,\ or \qquad (2)$$
$$= [TSF_f/(TSF_f+TSF_a)] * 100,\ or$$

$$TSF_f = TSF_a * FatR/(100\text{-}FatR)$$

and

$$TSF_f = Flow_f * D_f{}^t \qquad (3)$$

in which

$FatR$ =    desired fat content of the final product in wt.%

$Tf$ =    total fat content per kg of the final product

$Ta$ =    Total amount of water-soluble solids per kg of final product

$TSFa$ =    total solids flow of the aqueous phase

$TSF_f$ =    total solids flow of the fat phase corrected for temperature

$D_f{}^t$ =    density of the fat phase corrected for temperature

$Flow_f$ =    flow of liquid fat in l/h.

Substituting (2) in (3) gives formula (4) and substituting (1) in (4) gives formula (5)

$$Flow_f = [TSF_a * FatR/(100\text{-}FatR)]/D_f{}^t \qquad (4)$$

$$Flow_f = [Flow_a * D_a * TS_a * FatR/(100\text{-}FatR)]/D_f{}^t,\ or \qquad (5)$$

$$Flow_f = Flow_a * TS_a * FatR/(100\text{-}FatR) * D_a/D_f{}^t \qquad (5)$$

This amount of fat $Flow_f$ is pumped by pump 16 to the static mixer 17. The amount of fat actually pumped is checked by measurement of the flow F and the temperature T, and a programmable logic controller (PLC) will instruct the speed control Sc to adapt the speed of the pump 16, in order to maintain the flow as accurately as possible to the setting by applying methods (e.g. PID regulation) known in the art.

In the process of the invention, the aqueous phase is prepared by using techniques that are known in the art. Milk, skimmed milk or solutions of caseinates, whey, demineralised whey, whey protein concentrates and/or other protein concentrates in water are used as basis for the aqueous phase. Appropriate amounts of water-soluble components such as lactose or other carbohydrates, minerals, trace elements, emulsifiers and/or some vitamins are dissolved in this liquid and homogeneously mixed in tank 1. Whole milk can be selected as a basis ingredient, if butter oil must be an important part of the fat composition in the final product.

A fat phase that is suitable for manufacturing according to the invention is prepared under conditions that prevent deterioration of the fat by using methods that are known in the art. The fat phase may comprise vegetable oils like soybean oil, rapeseed oil, palm kernel oil, coconut oil, sunflower oil, evening primrose oil, maize oil and/or fats from animal origin like butter oil or fish oil and/or structured fats and/or oils derived from microorganisms such as algae. The fat phase may also comprise emulsifiers like soy lecithin and/or fat soluble vitamins and/or antioxidants, added separately or as premix, or other compounds.

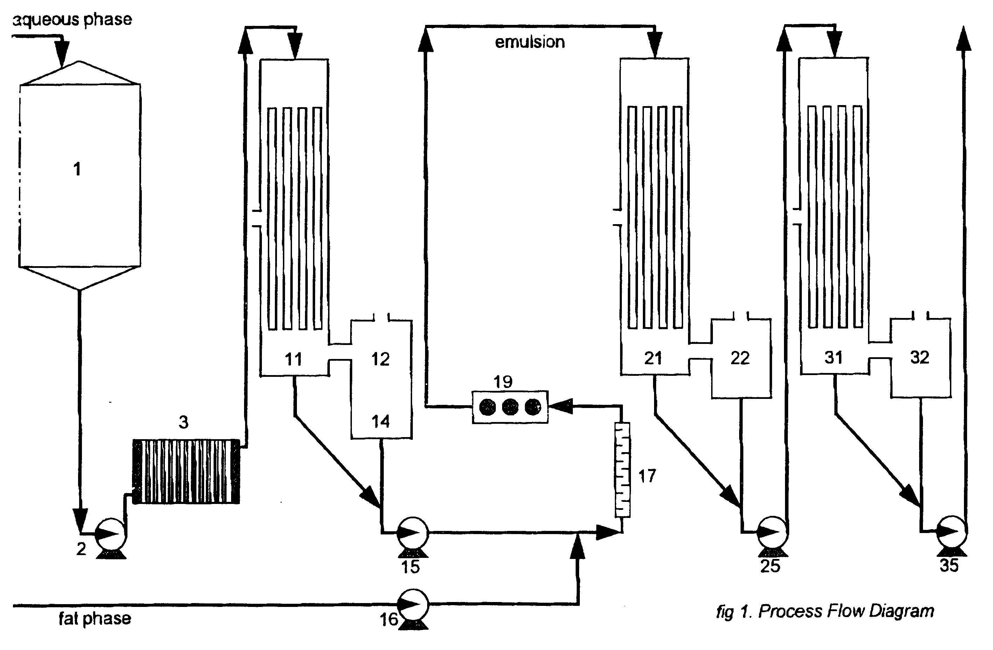

The process of the invention can be performed using an equipment as depicted in figure 1. In figure 1, vessel 1 is for storing and supplying the aqueous phase of the food product to be prepared, Pa is a pump for the aqueous phase, 3 is a heat exchanger, for example a steam infusion heater or steam injection heater for pasteurising or sterilising the aqueous phase, 11, 21 and 31 are evaporator effects for stepwise dehydrating the aqueous phase, 12, 22 and 32 are separators, 14 is a buffer tank, 15 is a homogeniser producing an emulsion which is fed to the next evaporator effect (21), 2 and 15 are pumps for the aqueous phase, 16 is a pump for supplying the fat phase of the food product, and 25 and 35 are pumps for the concentrated emulsion.

**Example 1:**

*Manufacturing process for infant formulae*

An infant formula is prepared from an aqueous phase and a fat phase. Table 1 lists the amounts of ingredients can be present in the aqueous phase of the infant formula.

Table 1

| List of ingredients of aqueous phase | |
| --- | --- |
| *Ingredient* | *Amount in kg per 1000 l* |
| skimmed milk protein | 50-60 |
| demineralised whey powder | 50-60 |
| lactose | 100-130 |
| calcium carbonate | 2.0-4.3 |
| calcium phosphate | 0.2-3.5 |
| calcium chloride | 0.5-2.3 |
| magnesium chloride | 0.5-1.4 |
| sodium citrate | 1.0-2.2 |
| sodium chloride | 0.2-1.0 |
| potassium hydroxide | 0.1-1.3 |
| potassium citrate | 0.4-2.5 |
| choline chloride | 0.1-0.8 |
| vitamin premixes (B1, B2, B6, B12, folic acid, pantothenic acid, niacin, biotin, ascorbate, taurine) | 0.7-3.0 |
| trace element premixes (Fe, Cu, Zn, Mn, Mo, Sc, Cr, I) | 0.1-0.6 |

The aqueous phase as produced in vessel 1 may be chilled for storage purposes or be used directly. It is heated in heat exchanger X. The heating treatment that is applied must be sufficient to kill microorganisms that are present in the aqueous phase. Typical conditions are 70-150°C for 0.2 sec - 15 min, preferably 100-140°C for 1 sec - 5 min and most preferably 125-135°C for 2-30 seconds. Part of the water is subsequently evaporated from the aqueous phase in 11 until a dry solids content of 12-40% and more preferably 15-30% is obtained. The vapour separator 12 will separate the vapour (steam) from the product.

A fat phase that is suitable for manufacturing the infant formula is prepared under conditions that prevent deterioration of the fat by using methods that are known in the art. Table 2 provides a list of fat ingredients for a typical infant formula. The fat phase can be stored under appropriate conditions to prevent deterioration (such as creating a nitrogen blanket above the fat) or be used directly. An appropriate amount of the fat phase is dosed to the aqueous phase that flows from the the first evaporator effect 11 and the vapour separator 12, using the system as described above with reference to figure 2.

12 is equipped with a buffer tank 14 in order to collect all the product that will condensate from 12

Table 2

| Fat composition of infant formula (fat blend) | |
| --- | --- |
| *Ingredient* | *Amount in kg per 1000 kg fat* |
| palm oil | 200-400 |
| rapeseed oil (low erucic acid) | 180-350 |
| sunflower oil (high oleic acid) | 150-250 |
| coconut oil | 150-250 |
| fish oil | 1-50 |
| butter oil | 1-10 |
| lecithins | 1-100 |
| vitamin premix (vitamins D, E, K, A + stabilisers, e.g. ascorbyl palmitate) | 0.1-0.5 |

For manufacturing a typical infant formula, sufficient amount of aqueous phase and fat phase are mixed together to obtain a final fat content of 20-35 % (w/w). Mixing occurs by pumping the mixture through a static mixer 17. After mixing the mixture is immediately homogenised by homogeniser 19, using conditions that are known in the art: if a two-stage homogeniser is used, the temperature will normally be in the range of 50-70°C and the pressure will be 100-250 bar in the first stage and 15-40 bar in the second stage.

The emulsion is further concentrated in one or more evaporator effects (21 and/or 31) in order to obtain a solids content that is suitable for direct spray-drying; this emulsion can directly be pumped to the spray-drier or be stored. For some products, or with longer storing before spray-drying, an additional hornogenising step before or after storage may be advantageous. Various prior art spray-drying techniques can be applied.

## Claims

1. A process for preparing a food product comprising adding a fat phase to an aqueous phase, *characterised* by measuring the density, the mass flow and optionally the temperature of the aqueous phase prior to the addition, as well as the density, the mass flow and optionally the temperature of the fat phase prior to the addition, feeding the combined measured values to a metering unit metering the fat addition according to a predetermined ratio between fat phase and aqueous phase in the food product.

2. A process according to claim 1, wherein the fat phase is added to the aqueous phase between two evaporator effects.

3. A process for preparing a food product comprising adding a fat phase to an aqueous phase and evaporating the aqueous phase in a plurality of evaporator effects, *characterised* in that the fat phase is added to the liquid aqueous phase and homogenised, said adding and homogenising being located between two evaporator effects.

4. A process according to claim 2 or 3, wherein said two evaporator effects are followed by a third evaporator effect.

5. A process according to any one of claims 2-4, wherein the homogenised food product is dried immediately downstream of the last evaporator effect.

6. A process according to any one of claims 2-5, wherein the evaporator effect upstream of the fat addition is provided with a buffer tank located near the outlet of said evaporator effect.

7. A process according to any one of claims 1-6, wherein the aqueous phase to which the fat phase is added has a water content of between 48 and 92 % by weight, preferably between 60 and 85 % by weight.

8. Food product containing, on a dry' substance basis, 20-35 % by weight of fat and 65-80 % by weight of water-soluble ingredients, the fat phase having an average particle size distribution D(4,3) of between 0.3 and 0.8 $\mu$m and a

peroxide value of less than 1 meq/kg fat.

fig 1. Process Flow Diagram

fig 2. Control Diagram

European Patent Office

## EUROPEAN SEARCH REPORT

Application Number

EP 97 20 1170

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 90 00862 A (STORK AMSTERDAM)<br>* claims 1-6; figure *<br>--- | 1 | A23C11/04<br>A23C9/15<br>A23L1/30<br>A23C1/12 |
| X | ALDERLIESTE P J: "IN-LINE STANDAARDISEREN VAN HET VETGEHALTE VAN MELK"<br>VOEDINGSMIDDELEN TECHNOLOGIE,<br>vol. 25, no. 16 / 17, 6 August 1992,<br>pages 9-11, XP000288924<br>* page 11, column 1 *<br>--- | 1 | |
| A | GB 1 232 640 A (ABBOTT LABORATORIES)<br>* example 1 *<br>--- | 1 | |
| A | DE 26 31 703 A (GEBRÜDER OTT AG)<br>* claims 1-8; figure *<br>--- | 1 | |
| A | FR 2 231 318 A (ALFA-LAVAL)<br>* claims 1,2; figure *<br>--- | 1 | |
| A | DE 26 28 225 A (MASCHINENFABRIK STOMAG)<br>* claim 1; figure 10 *<br>--- | 1 | TECHNICAL FIELDS SEARCHED (Int.Cl.6) |
| A | DE 26 28 226 A (MASCHINENFABRIK STROMAG)<br>* figures 1,2 *<br>--- | 1 | A23C<br>A23L |
| X,D<br>A | EP 0 624 317 A (FRIESLAND COÖPERATIE)<br>--- | 8<br>1,3,5 | |
| X | GB 2 273 234 A (WATERFORD CREAMERY LTD)<br>* claims 22,25; example 2 *<br>--- | 8 | |
| X | US 4 810 518 A (D. HAISMAN)<br>* claims 1,2,20; example I *<br>--- | 8 | |
| X | US 4 434 186 A (N. DESIA)<br>* column 5, line 49 - line 57; example 1 *<br>----- | 8 | |

The present search report has been drawn up for all claims

| Place of search | Date of completion of the search | Examiner |
|---|---|---|
| THE HAGUE | 23 February 1998 | Desmedt, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent**

Office

Application Number

EP 97 20 1170

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

### SEE SHEET B
### (in case of Lack of Unity)

☒ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

European Patent Office

## LACK OF UNITY OF INVENTION

The Search Division considers that the present European patent application does not comply with the requirement of unity of invention and relates to several inventions, or groups of inventions, namely:

The main problem underlying the present application concerns the preparation of a fat containing foodstuff by adding a fat phase to an aqueous phase in such a manner that a homogenised food product is obtained (well defined particle size distribution of the fat component) which meets strict standards as to microbiological safety while the sensitive components of the fat phase in the product remain undamaged.

The proposed solution is (claims 3-7): evaporating the aqueous phase in a plurality of evaporator effects, while the fat phase is added to the aqueous phase and homogenised therewith between two evaporator effects.
This is considered to be an improvement over the prior art EP-A-624317 wherein the fat phase is added to one of the evaporator effects themselves (optionally followed by a homogenisation).
The product obtainable by this process having a fat phase with a specific average particle size and a specific peroxide value has been defined in claim 8.

The subject matter of claim 1 concerns a process for preparing a food product by adding a fat phase to an aqueous phase wherein the density and the mass flow of the aqueous phase and of the fat phase is measured prior to the mixing of the two phases and wherein the measured values are fed to a metering unit metering the fat addition according to a predetermined ratio of fat phase/aqueous phase.
This subject matter is considered to be the solution of a different problem, namely the provision of a perfectly matched fat addition which is adapted to possible fluctuations in the composition of the aqueous phase. It cannot be seen how the technical features of claim 1 can be a solution to solve the main problem as defined above.

A priory the common concept linking the two different solutions is the preparation of a fat containing food by the addition of a fat phase to an aqueous phase. This unifying concept is well known in the food industry and has been described in EP-A-624 317 and GB-A-1 232 640

European Patent Office

## LACK OF UNITY OF INVENTION

In the absence of a novel single general inventive concept linking the inventions, the application lacks unity and the subject-matters listed below becomes a separate invention. Each of the inventions listed below is a distinct invention, characterised by its own technical features.
Searching the different subjects would have caused major additional searching efforts. Only the first subject was searched.

The separate inventions are:

1. Claims 1-2: Addition of a fat phase to an aqueous phase by measuring the density and the mass flow of the two phases before mixing and metering the fat addition according to a predetermined ratio between fat phase and aqueous phase.

2. Claims 3-8: Preparation of a homogenised fat containing food: an aqueous phase is evaporated in a multiple effect evaporator, the addition of the fat phase to the aqueous phase and the homogenisation of the mixture are carried out between two evaporator effects. Food product obtainable by this process having a specific fat content, a specific particle size distribution of the fat and a specific peroxide value of the fat.

EPO Form          Supplementary Sheet B (1996)